# EUROPÄISCHE PATENTSCHRIFT

(11) **EP 2 805 869 B1**
(45) Veröffentlichungstag und Bekanntmachung des Hinweises auf die Patenterteilung: **11.07.2018**
(21) Anmeldenummer: 14001457.2
(22) Anmeldetag: 23.04.2014
(51) Int. Cl.: G05D 23/24, H05B 1/02, B60N 2/56

(54) **Heizeinrichtung für Kraftfahrzeuge, Sitzheizung sowie Lenkradheizung mit einer solchen Heizeinrichtung und Verfahren zur Steuerung der Temperatur einer Heizeinrichtung für Kraftfahrzeuge**
Heating device for motor vehicles, seat heater and steering wheel heater with such a heating device and method for controlling the temperature of a heating device for motor vehicles
Dispositif de chauffage pour des véhicules automobiles, chauffage de siège et chauffage de volant doté d'un tel dispositif de chauffage et procédé de commande de la température d'un dispositif de chauffage pour des véhicules automobiles

(30) Priorität: 26.04.2013 DE 102013007243
(43) Veröffentlichungstag der Anmeldung: 26.11.2014
(73) Patentinhaber: I.G. Bauerhin GmbH, 63584 Gründau (DE)
(72) Erfinder: Barthel, Dieter, D-63517 Rodenbach (DE); Strenge, Klaus, D-61169 Friedberg (DE); Diehl, Christian, D-63633 Birstein (DE); Farr, Axel, D-63607 Wächtersbach (DE); Michelmann, Jochen, D-63571 Gelnhausen (DE)
(74) Vertreter: Grimm, Ekkehard

(56) Entgegenhaltungen:
- AT-B- 373 116
- DE-A1-102006 034 466
- GB-A- 2 093 320
- JP-A- H06 301 427
- US-A1- 2012 049 586

## Beschreibung

Die vorliegende Erfindung betrifft eine Heizeinrichtung gemäß dem Oberbegriff des Anspruchs 1, eine Sitzheizung sowie eine Lenkradheizung mit einer solchen Heizeinrichtung und ein Verfahren zur Steuerung der Temperatur einer mindestens einen Heizleiter umfassenden elektrischen Widerstandsheizung für Kraftfahrzeuge gemäß dem Oberbegriff des Anspruchs 4 (siehe zum Beispiel die DE 10 2006 034 466 A1). Es ist Stand der Technik für Sitzheizungs- oder Lenkradheizungsregelungen, einen Temperatursensor in die Heizmatte zu integrieren und über einen Soll-Istwert Vergleich die Oberflächentemperatur der Heizmatte zu regeln.

Die DE 4141224 A1 beschreibt ein Verfahren zur Steuerung der Heizleistung eines Flächenheizelements, insbesondere einer Kfz-Sitzheizung, wobei zunächst die gewünschte Temperatur des Flächenheizelements als Sollwert vorgegeben und dann der Istwert in Form einer temperaturabhängigen Zeitsteuerung einer Heizenergiequelle an den Temperatursollwert herangeführt wird. Dabei wird der Sitz im besetzten Zustand als ein geschlossenes System betrachtet, auf das keine Störgrößen wirken.

Daher kann unter Kenntnis der Starttemperatur sehr genau mittels einer Steuerung eine Solltemperatur an der Sitzoberfläche eines Sitzbezugs eingestellt werden. Dieser Ansatz bedarf einer genauen Kenntnis des wärmetechnischen Übergangswiderstands und der thermischen Kapazität zwischen Widerstandsheizung und Sitzoberfläche. Diese Art der Elektronik ist so stark in ihrer Baugröße geschrumpft, dass sie an der Position des Temperatursensors untergebracht ist. Dadurch entfällt ein externer Temperatursensor. Der Einfluss unterschiedlich schwerer Personen oder der Einfluss von Teil- oder Ganzabdeckungen der zu beheizenden Oberfläche wird mit diesem System nicht erfasst und damit nicht berücksichtigt. Die regelungstechnischen Nachteile des massigeren und dadurch trägeren Temperatursensors sind durch Zeitsteuerungsfunktionen kompensiert worden.

Die DE 10206114 C1 beschreibt eine Klimatisierungsvorrichtung, die unter anderem eine Heizeinrichtung aufweist. Diese Heizeinrichtung weist auch eine Regelungseinrichtung auf, die elektrisch mit einer Bedienungseinrichtung verbunden ist. Außerdem steht sie mit einem Temperatursensor in Verbindung. Der Temperatursensor ist vorzugsweise in der Nähe des Heizelements angeordnet. Außerdem steht die Regeleinrichtung mit dem Heizelement in Verbindung.

Auch sind Systeme bekannt, die zur Regelung der Oberflächentemperatur den Temperaturkoeffizienten des Heizleiters nutzen. Man hat bereits versucht, auf eine konstante Heizdrahttemperatur zu regeln; dabei ist das Heizmedium als flächiger Temperatursensor genutzt worden. Dadurch sind zumindest ähnlich zur Regelung mit einem diskreten Temperatursensor auch mit Einschränkungen Rückwirkungen von den unterschiedlichen Regelstrecken und Lasten erfasst worden. Auch führt eine Vollabdeckung der Heizung nicht zu extremen Temperaturen, da die Heizleitertemperatur direkt geregelt wird. Jedoch ist auch bei diesen Maßnahmen das Problem der Teilabdeckung, mittels einer vermittelnden Messung über die ganze Heizfläche, nicht gelöst. Der Heizleiter funktioniert wegen seines geringen Temperaturkoeffizienten nur unzureichend als Temperatursensor.

Auch sind Systeme, die eine Kombination einer NTC-Regelung mit einer temperaturabhängigen Zeitsteuerung aufweisen, bekannt. Bei dieser Art von Regelung ist die Steuerelektronik selbst soweit geschrumpft, dass diese direkt an der Position des Temperatursensors untergebracht werden kann. Dadurch ist ein externer Temperatursensor entfallen. Die regelungstechnischen Nachteile des nun massigeren und dadurch trägeren Systems sind durch Zeitsteuerungsfunktionen kompensiert worden.

Der vorliegenden Erfindung liegt die Aufgabe zugrunde, die Nachteile des Stands der Technik zu beseitigen, und insbesondere eine solche Anordnung sowie ein entsprechendes Verfahren zu schaffen, bei dem ein Temperatursensor (NTC) im Heizelement entfallen kann, um somit eine einfache und kostengünstige regelbare Heizeinrichtung herzustellen. Weiterhin soll der Temperatursensor aus einem spür-Platz genommen hat. Befindet sich niemand auf dem Sitz, so wird eine hohe Aufheizgeschwindigkeit festgestellt werden. Befindet sich eine Person auf dem Sitz, so wird eine niedrige Aufheizgeschwindigkeit festgestellt. Das Steuergerät wertet diesen zeitlichen Verlauf des das Aufheizen kennzeichnenden Wertes aus, um daraus zu bestimmen, ob der Sitz belegt ist. Es wird somit ein zeitlicher Verlauf von Spannung und Strom, im Hinblick auf das Aufheizverhaltens der Sitzheizung, ausgewertet, um die Belegung oder Nichtbelegung des Sitzes zu bestimmen. Allerdings ist auch angegeben, dass die Sitztemperatur ohnehin bestimmt wird, um die Sitzheizung entsprechend zu regeln, so dass die Sitzflächen nicht zu heiß werden; dazu wird aus Strom und Spannung ein Widerstand ermittelt und daraus eine Temperatur berechnet.

Die AT 373 116 betrifft eine Vorrichtung zur Temperaturbegrenzung bei Kanalheizern, die zur Einführung eines durch ein Gebläse bewegten Luftstroms in einen Arbeitsraum vorgesehen ist und die zur Erwärmung des Luftstroms ein Heizregister umfasst. Der Kanalheizer selbst und ein Überhitzungsschutzgerät sind voneinander getrennt und letzteres ist mit einem Hilfsheizkörper versehen. Der Gegenstand dieses Dokuments besteht in einer Vorrichtung, bei der ein in dem Kanalheizer vorgesehener und dabei dem Luftstrom ausgesetzter Hilfsheizkörper mit einer Schützspule eine Parallelschaltung bildet, und der Schutztemperaturbegrenzer ist dieser Parallelschaltung vorgeschaltet. Der Hilfsheizkörper weist eine niedrigere Wärmekapazität als das Heizregister auf und ist derart mit dem Schutztemperaturbegrenzer räumlich verknüpft, dass dieser nahe der Temperatur des Hilfsheizkörpers folgt.

Die US 2012/049586 A beschreibt eine planare Heizvorrichtung und einen mit der Vorrichtung ausgestatteten Sitz. Eine erste und eine zweite Heizeinrichtung sind parallel zu einer Stromquelle verbunden. Der Aufbau umfasst einen Thermistor, ein Thermostat, welches in Reihe mit der zweiten Heizeinrichtung in Kontakt steht, ein Heizungsteil, das den Thermistor und das Thermostat heizt, und ein Steuergerät, das aufgrund von Temperaturen von der ersten und der zweiten Heizeinrichtung entsprechend der Temperaturinformation von dem Thermistor steuert. Der Thermistor, das Heizungsteil und das Thermostat sind in einem Bereich außerhalb einer auf dem Sitz sitzenden Person angeordnet, ein Bereich, der für eine auf dem Sitz sitzenden Person nicht spürbar ist, wie beispielsweise unterhalb einer Sitzlehne, und somit von einer auf dem Sitz sitzenden Person nicht wahrgenommen wird.

Eine Steuerung, wie sie in JP H06 301427 A beschrieben, ist aus Heizeinheiten gebildet, die mehrere Heizelemente zum Beheizen umfasst, die parallel miteinander verschaltet sind. Ein Steuerteil steuert die Heizeinheiten und eine Zusatzheizungseinrichtung. Die Zusatzheizungseinrichtung weist Hilfsheizungen auf, die in Reihe mit den Heizeinheiten und einem Thermostat verbunden sind. Das Thermostat wird durch die Hilfsheizungen beheizt, so dass die komplette Temperatur nur von dem Thermostat kontrolliert wird.

Die GB 2 093 320 A beschreibt einen elektrischen Herd oder Kocher mit einer Kochplatte, an deren Unterseite ein oder mehrere elektrische Heizer angeordnet sind, mit einer Temperaturkontrolleinrichtung, die mit mindestens einem der Heizer thermisch verbunden ist, und mit einem temperaturempfindlichen Bauteil und mit einem elektrischen Hilfsheizer zur Zufuhr von Wärme zu dem Bauteil. Weiterhin sind Einrichtungen vorhanden, die anzeigen, wenn das Bauteil auf oder über eine vörbestimmte Temperatur erwärmt ist. Das temperaturempfindliche Bauteil enthält einen Thermistor und einen zwischen dem Hilfsheizer und dem Thermistor angeordneten Wärmepuffer.

Der vorliegenden Erfindung liegt die Aufgabe zugrunde, die Nachteile des Stands der Technik zu beseitigen, und insbesondere eine solche Anordnung sowie ein entsprechendes Verfahren zu schaffen, bei dem ein Temperatursensor (NTC) im Heizelement entfallen kann, um somit eine einfache und kostengünstige regelbare Heizeinrichtung herzustellen. Weiterhin soll der Temperatursensor aus einem spürbaren Bereich einer benutzerberührbaren Fläche, in der die Heizeinrichtung angeordnet ist, entfernt werden, um die Problematik der Abzeichnung bzw. der Haptik zu beseitigen.

Gelöst wird diese Aufgabe durch eine Heizeinrichtung mit den Merkmalen des Patentanspruchs 1, durch eine Sitzheizung nach Anspruch 2, durch eine Lenkradheizung nach Anspruch 3 sowie durch ein Verfahren gemäß Anspruch 4.

Die erfindungsgemäße Heizeinrichtung ist für Kraftfahrzeuge, vorzugsweise zum Beheizen eines Kraftfahrzeugsitzes (Sitzfläche und/oder Rückenlehne) oder eines Lenkrads, vorgesehen und umfasst eine elektrische Widerstandsheizung mit mindestens einem Heizleiter und eine dieser Widerstandsheizung zugeordnete Steuereinrichtung sowie einen Temperatursensor. Der Heizleiter besitzt einen definierten Temperaturkoeffizienten. Die Steuereinrichtung ist entfernt von der Widerstandsheizung außerhalb deren Heizbereichs angeordnet. Die Steuereinrichtung weist einen Hilfswiderstand auf, der somit ebenfalls entfernt von der Widerstandsheizung außerhalb deren Heizbereichs angeordnet ist und somit nicht durch die direkt von der Widerstandsheizung abgegebene Wärme beeinflusst wird. Der Hilfswiderstand liegt an einer Spannung an oder wird durch einen Strom durchflossen, wobei diese Spannung bzw. dieser Strom proportional zu der an der Widerstandsheizung anliegenden Spannung bzw. dem durch die Widerstandsheizung fließenden Strom ist. Der Temperatursensor ist innerhalb der Steuereinrichtung so angeordnet, dass er thermisch mit dem Hilfswiderstand gekoppelt ist.

Die Widerstandsheizung wird folglich in Abhängigkeit eines Sollwerts über die Steuereinrichtung mit Heizstrom versorgt und die Solltemperatur der Widerstandsheizung wird aufgrund der Erfassung von Istwerten geregelt. Weiterhin umfasst die Heizeinrichtung den Temperatursensor, der eine Temperatur in der Steuereinrichtung erfasst. Die Steuereinrichtung ist entfernt von der Widerstandsheizung außerhalb deren Heizbereichs angeordnet und weist den Hilfswiderstand auf, der mit dem Heizstrom der Widerstandsheizung oder der an der Widerstandsheizung anliegenden Spannung versorgt wird. In der Steuereinrichtung sind Kennlinien gespeichert, die die von der Widerstandsheizung in Abhängigkeit des Heizstroms erzeugte Wärme zu der durch den Hilfswiderstand erzeugten Wärme in der Steuereinrichtung zur Erfassung der Istwerte korrelieren.

Das erfindungsgemäße Verfahren dient zur Steuerung der Temperatur einer mindestens einen Heizleiter umfassenden elektrischen Widerstandsheizung für Kraftfahrzeuge mittels einer Steuereinrichtung und eines Temperatursensors. Verfahrensgemäß wird die Temperatur des thermisch mit einem Hilfswiderstand gekoppelten Temperatursensors dazu herangezogen, um die an der Widerstandsheizung anliegende Spannung oder den durch die Widerstandsheizung fließenden Strom einzustellen. Hierbei dient der Hilfswiderstand in der Steuereinrichtung als Aufheizmodell für die Widerstandsheizung, wozu der Hilfswiderstand mit einer Spannung proportional zu der an der Widerstandsheizung anliegenden Spannung oder mit einem Strom, der zu dem durch die Widerstandsheizung fließenden Strom proportional ist, betrieben wird.

Ein Vorteil dieser Erfindung ist auch darin zu sehen, dass es durch die abgesetzte bzw. entfernte Montage der Steuereinrichtung von der zu beheizenden und damit zu regelnden Oberfläche zu keinen Abzeichnungs- oder Positionierungsproblemen im benutzerberührten Bereich, beispielsweise Lenkrad oder Fahrzeugsitz, kommt. Auch ist dadurch eine verbesserte Regelgenauigkeit bei Teilabdeckung der benutzerberührten Fläche gegeben. Durch den Wegfall des mindestens einen Temperatursensors, beispielsweise eines NTC, und der damit verbundenen Positionierung, ist eine leichtere, schnellere und damit kostengünstigere Temperaturabstimmung möglich; auch wird die Funktionssicherheit durch den Wegfall des Temperatursensors erhöht.

In einer vorteilhaften Ausgestaltung weist die Steuereinrichtung eine der Widerstandsheizung zugeordnete Spannungs- und/oder Strommesseinrichtung auf.

Es ist auch vorgesehen, dass die Steuereinrichtung einen Mikroprozessor aufweist, in dem Kennlinien gespeichert sind, die die über den Temperatursensor gemessene Temperatur zu der an der Widerstandsheizung anliegenden Spannung und/oder zu dem der Widerstandsheizung zugeführten Strom und damit zu der durch die Heizeinrichtung erzeugten Temperatur zuordnen. Diese Kennlinien werden spezifisch für die Heizeinrichtung unter unterschiedlichen Umgebungsbedingungen, wie beispielsweise Umgebungstemperatur und Luftfeuchtigkeit, ermittelt und gespeichert, so dass die Steuereinrichtung auf diese Kennlinien zugreifen kann, um bestimmte Werte, die sie während des Betriebs der Heizeinrichtung im Betrieb ermittelt, zu korrelieren.

Bevorzugt sind die Kennlinien auf das zeitliche Verhalten der Temperaturänderungen der Widerstandsheizung aufgrund von Änderungen der an Widerstandsheizung anliegenden Spannung und/oder aufgrund von Änderungen des der Widerstandsheizung zugeführten Stroms abgestimmt.

Verfahrensgemäß wird in einer bevorzugten Ausführungsform zusätzlich eine Temperaturänderung der Widerstandsheizung mittels einer Messung des an der Widerstandsheizung anliegenden Spannung und einer Messung des durch die Widerstandsheizung fließenden Stroms und einer Umrechnung dieser Messwerte unter Berücksichtigung des Temperaturkoeffizienten des Heizleiters der Widerstandsheizung zur Steuerung der Widerstandsheizung verwendet.

Darüber hinaus kann die Widerstandsheizung mittels in der Steuereinrichtung gespeicherter Kennlinien und unter Berücksichtigung des Temperaturkoeffizienten des Heizleiters eingestellt werden.

Es ist vorgesehen, dass die Widerstandsheizung mittels in der Steuereinrichtung gespeicherter Kennlinien eingestellt wird, die die über den Temperatursensor gemessene Temperatur zu der an der Widerstandsheizung anliegenden Spannung zuordnen.

Auch ist vorgesehen, dass die Widerstandsheizung mittels in der Steuereinrichtung gespeicherter Kennlinien eingestellt wird, die die über den Temperatursensor gemessene Temperatur zu dem durch die Widerstandsheizung fließenden Strom zuordnen.

Bei der vorstehend angegebenen Strom- bzw. Spannungsmesseinrichtung wird auf die Kombination von bekannten Verfahren in einem beobachtergesteuerten System zurückgegriffen. Ein Beobachter ist in der Regelungstechnik ein System, das aus bekannten Eingangs- und Ausgangsgrößen eines beobachteten Systems nicht messbare Größen rekonstruiert. Dazu wird das beobachtete Referenzsystem als Modell herangezogen; es beinhaltet einen Regler, der die messbaren Zustandsgrößen nachführt. Ein Beobachter kann nur dann entworfen werden, wenn das Referenzsystem über die vorhandenen Messgrößen beobachtbar ist. Die aus dem Stand der Technik bekannte Regelungselektronik, die in die Heizmatte integriert ist, wird um eine präzisere Strommessung mit einer Genauigkeit von ±1%, (üblich sind >±10% Genauigkeit für Überlastschaltungen) und um einen Hilfswiderstand, der thermisch mit dem Temperatursensor gekoppelt ist, erweitert.

Durch diese zumindest teilweise kontinuierliche und präzisere Strom- bzw. Spannungsmessung ist eine erhöhte die Bauteile schonende Frühabschaltung bei Kurzschluss oder Überlast gegeben.

Mit Kenntnis einer Starttemperatur wird analog zu einer temperaturabhängigen Zeitsteuerung die benötigte Wärmemenge ermittelt, die zu der gewünschten Oberflächentemperatur führt. Auch kann unter Kenntnis des speziell zu beheizenden Bereichs und damit der Regelstrecke der Temperaturverlauf des Heizdrahts über die Zeit bei Beaufschlagung mit dieser Wärmemenge ermittelt werden. Durch externe Einflüsse und unterschiedliche Bezüge weicht die Realität jedoch stark von der gemessenen Wärme ab. Daher wird mittels der genauen Strommessung die Temperatur des Heizleiters über die Veränderung des Laststroms, verursacht durch den Temperaturkoeffizienten des eingesetzten Heizleiters, ausgelesen.

Der Laststrom wird im Startfall mit der Starttemperatur gleichgesetzt und es wird eine maximale Erwärmung des Heizleiters bei zulässigem Stromabfall vorgegeben. Dadurch wird sichergestellt, dass es zu keiner Überhitzung durch eine Abdeckung der Heizung kommt.

Gleichzeitig wird die Temperatur des Heizleiters über die Zeit erfasst und damit das Aufheizmodel plausibilisiert. Abweichungen und damit Einflüsse unterschiedlicher Lasten (Belastungen) und Bezüge (z. B. Sitz- oder Lenkradbezüge) oder gar Heizleiterausfälle werden somit erfasst und ausgeregelt.

Das Problem einer Teilabdeckung durch die Nutzung des PTC-Effekt behafteten Heizleiters, der ja auch als Temperatursensor dient, in Zusammenwirkung mit der Heizleistungszeitsteuerung, ist erheblich verbessert und kann genauer abgefangen werden als die derzeit angewendeten Einzellösungen, wie entweder PTC-Effekt und eigensichere Flächenleistung, Failsafe-Timer gesteuerte Leistungsreduktion oder zusätzliche Temperatursensoren.

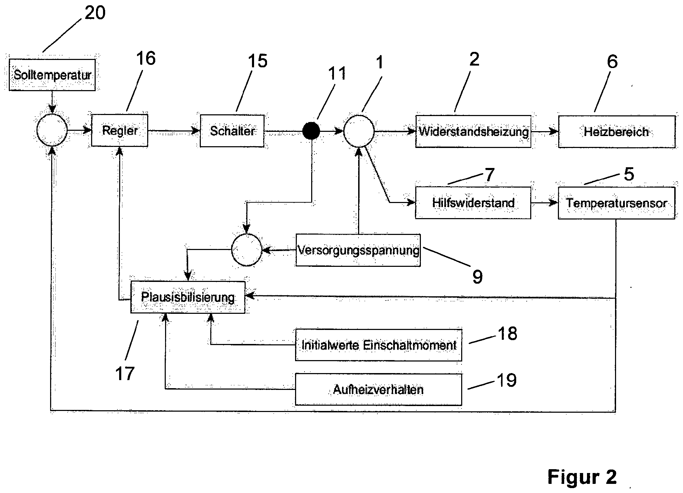

Im Weiteren wird ein Verfahren zum Betreiben der erfindungsgemäßen Heizeinrichtung beschrieben (siehe auch Figur 2). Bei diesem Verfahren wird eine Versorgungsspannung gleichzeitig an einen Hilfswiderstand in der Steuereinrichtung und an einen Heizleiter in der Widerstandsheizung, wobei sich dessen Widerstand in Abhängigkeit der Temperatur der Widerstandsheizung ändert, angelegt. Es wird ein kontinuierliches Bestimmen der mindestens einen Temperatur der Steuereinrichtung und ein kontinuierliches Erfassen mindestens eines Laststroms und mindestens einer Lastspannung der Widerstandsheizung durchgeführt. Dabei werden die Startzustände von Laststrom, Lastspannung und Starttemperatur der Steuereinrichtung gespeichert.

Das bestimmungsgemäße Verfahren geht davon aus, dass die Starttemperatur der Steuereinrichtung identisch der Starttemperatur der Widerstandsheizung ist, da Widerstandsheizung und Steuereinrichtung im gleichen Umfeld angeordnet sind.

Durch diese Grundbedingung wird vorteilhaft erreicht, dass die Betriebshistorie der Widerstandsheizung in Form von Wärmemenge in der Steuereinrichtung gespeichert wird. Es wird hierzu eine Kennlinie in der Steuereinrichtung hinterlegt, die den zeitlichen Verlauf der Temperatur der Steuereinrichtung, beheizt durch den Hilfswiderstand, in ein Verhältnis zum zeitlichen Verlauf der Temperatur der Heizeinrichtung, beheizt durch den Lastwiderstand, in der Widerstandsheizung setzt. Somit können basierend auf der Grundbedingung gleicher Starttemperaturen durch Messung der Temperatur der Steuereinrichtung Rückschlüsse auf die Temperatur der Widerstandsheizung gezogen werden.

Wie zuvor beschrieben ist, wird, simultan zur kontinuierlichen Erfassung der Temperatur der Steuereinrichtung, der Widerstand der Widerstandsheizung (Heizleiter) über mindestens einen Laststrom und mindestens eine Lastspannung kontinuierlich gemessen. Der Widerstand der Widerstandsheizung verändert sich gemäß dem materialabhängigen Temperaturkoeffizienten in Abhängigkeit der Temperatur der Widerstandsheizung. Somit kann durch einen mathematisch eindeutigen Zusammenhang von der Widerstandsveränderung auf die Temperaturveränderung der Widerstandsheizung geschlossen werden. Unter Zuhilfenahme der Grundannahme, dass im Startmoment die Temperaturen von Steuereinrichtung und Widerstandsheizung gleich sind, kann so kontinuierlich die Temperatur der Widerstandsheizung bestimmt werden. Die Nutzung der relativen Veränderung des Widerstands hat den Vorteil, dass das System unabhängig gegenüber einer Langzeitdrift der Messtechnik, Fertigungstoleranzen und Veränderungen der Widerstandsheizung im eingebauten Zustand ist.

Zudem kann die Temperatur der Widerstandsheizung, basierend auf dem bekannten Aufheizverhalten der Widerstandsheizung und einer bekannten Starttemperatur, aus der zugeführten Wärmemenge ermittelt werden.

Somit stehen vorteilhafterweise gleichzeitig drei Möglichkeiten zur Ermittlung der Temperatur der Widerstandsheizung zur Verfügung. Diese drei Möglichkeiten der Temperaturbestimmung der Widerstandsheizung sind in der Steuereinrichtung, wie nachfolgend noch näher beschrieben ist, implementiert.

In Abhängigkeit der Solltemperatur der Widerstandsheizung wird eine Solltemperatur der Steuereinrichtung definiert, die durch einen Regelkreis konstant gehalten wird.

Wird vor Erreichen der Solltemperatur der Steuereinrichtung, die Temperatur der Widerstandsheizung, die durch eine Spannungs- und Strommessung der Widerstandsheizung bestimmt ist, ein abhängiger Sollwert überschritten, so wird die der Widerstandsheizung zugeführte Leistung limitiert. Die Leistung wird derart begrenzt, dass die Temperatur der Widerstandsheizung, die durch Spannungs- und Strommessung der Widerstandsheizung bestimmt ist, konstant bleibt. Vorteilhafterweise wird bei thermischer Isolation der Widerstandsheizung, wie beispielsweise durch einen auf dem Sitz befindlichen Gegenstand, eine Begrenzung der Temperatur der Widerstandsheizung erreicht.

Das Aufheizverhalten der Widerstandsheizung wird zudem ständig mit dem bekannten Aufheizverhalten der Widerstandsheizung bei gegebener Starttemperatur verglichen. Bei Abweichungen wird durch eine Heizleistungsreduktion eine übermäßige Erwärmung der Widerstandsheizung vermieden.

Die Heizleistungslimitierung erfolgt durch zyklisches Aktivieren und Deaktivieren eines Leistungsschalters, der an die Widerstandsheizung und gleichzeitig an den Hilfswiderstand Spannung anlegt. Eine Aktivierungszeit kann zwischen 0% bis 100% des Zyklus betragen (PWM). Unter PWM ist die sogenannte Pulsweitenmodulation zu verstehen. PWM ist eine Modulationsart, bei der eine technische Größe, beispielsweise ein elektrischer Strom, zwischen zwei Werten wechselt. Dabei wird bei konstanter Frequenz der Tastgrad eines Impulses moduliert. Der Tastgrad ist eine dimensionslose Verhältniszahl, mit einem Wert von 0 bis 1 oder 0 bis 100% angegeben. Die Temperatur der Widerstandsheizung überträgt sich von der Heizmatte auf die Bezugsoberfläche und ergibt somit die Bezugsoberflächentemperatur. Dabei verändert sich der Widerstand der Widerstandsheizung in Abhängigkeit seines Berührungszustands. Ein die Bezugsoberfläche berührender Insasse entnimmt nämlich der entsprechenden Oberfläche Wärmeenergie, was Rückwirkungen auf die Temperatur der Widerstandsheizung verursacht. Dieser Widerstand, der Widerstandsheizung wird durch eine kontinuierliche Strom- und Spannungsmessung erfasst.

Bevorzugt werden die erfindungsgemäße Heizeinrichtung sowie das erfindungsgemäße Verfahren bei einer Sitzheizung oder einer Lenkradheizung eingesetzt.

Weitere Einzelheiten und Merkmale der Erfindung ergeben sich aus der nachfolgenden Beschreibung von Ausführungsbeispielen anhand der Zeichnung.

In der Zeichnung zeigt
- Figur 1A: ein Blockschaltbild einer erfindungsgemäßen Heizeinrichtung,
- Figur 1B: ein Blockschaltbild einer weiteren Ausführungsform der erfindungsgemäßen Heizeinrichtung,
- Figur 1C: ein weitere Ausführungsform der Heizeinrichtung gemäß der Erfindung, und
- Figur 2: ein Reglungsdiagramm für eine Heizeinrichtung, wie sie beispielsweise in Figur 1A dargestellt ist.

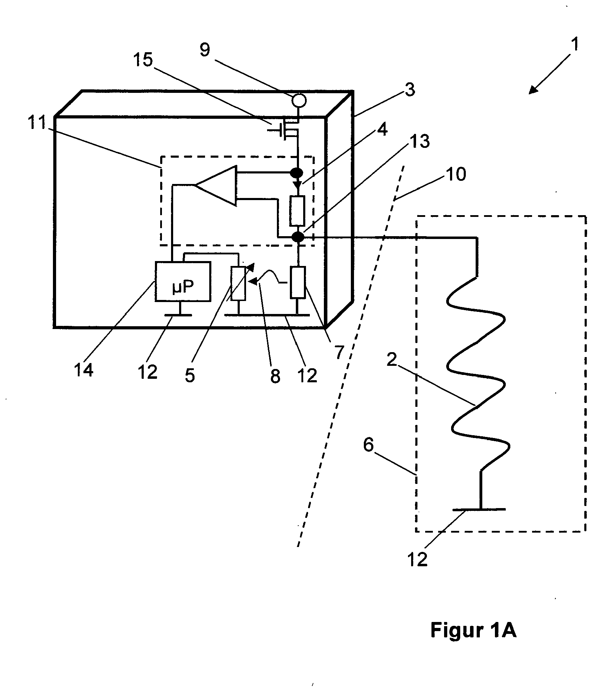

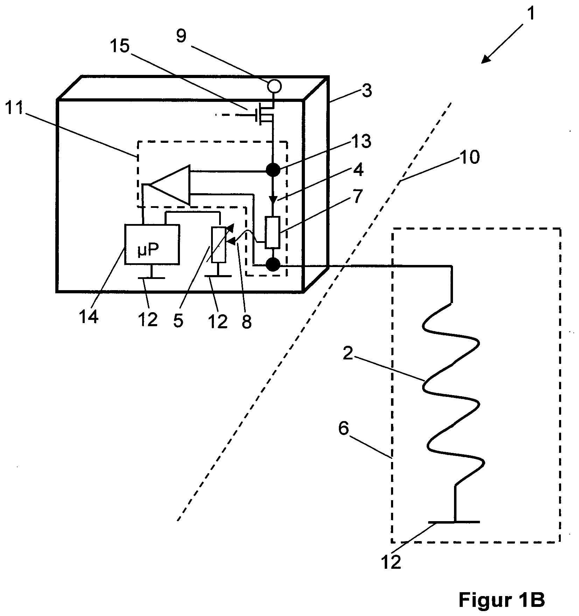

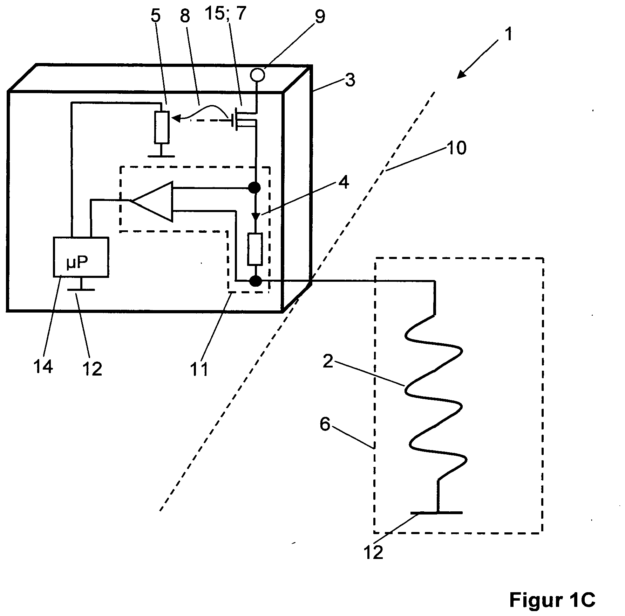

In den Blockschaltbildern der Figuren 1A, 1B und 1C ist die dargestellte Heizeinrichtung allgemein mit dem Bezugszeichen 1 bezeichnet. Diese Heizeinrichtung 1 umfasst eine Widerstandsheizung 2 sowie eine Steuereinrichtung 3. Diese Widerstandsheizung 2 wird dazu eingesetzt, eine Fläche in einem Kraftfahrzeug, beispielsweise die Sitzfläche und/oder die Rückenlehnenfläche eines Sitzes oder auch einen Lenkradkranz, zu beheizen. Der Heizbereich dieser Widerstandsheizung 2 ist mit der unterbrochenen Linie 6 gekennzeichnet.

Die Widerstandsheizung 2 ist an ihrem einen Ende mit Masse 12 oder einer über die Steuereinrichtung 3 verlaufenden Massezuführung verbunden und ist an der anderen Seite mit der Steuereinrichtung 3 verbunden. Die Widerstandsheizung 2 ist dabei von der Steuereinrichtung 3 abgesetzt bzw. entfernt angeordnet, was durch die gestrichelte Linie 10 angedeutet ist. Durch diese abgesetzte Montage der Steuereinrichtung 3 von der zu regelnden Heizfläche kommt es zu keinen Abzeichnungs- oder Positionierungsproblemen in dem benutzerberührten Bereich, dem Heizbereich 6.

Das Blockschaltbild der Steuereinrichtung 3 der Figur 1A umfasst eine Strommesseinrichtung 11 und einen Hilfswiderstand 7, der durch thermische Kopplung, mit dem Pfeil 8 angedeutet, mit einem Temperatursensor 5 in Verbindung steht. Die thermische Kopplung wird durch den Hilfswiderstand 7 erzielt, der separat zur Strommesseinrichtung 11 vorhanden ist, wobei hierzu vorteilhaft ist, dass der Temperatursensor 5 und der Hilfswiderstand 7 räumlich nahe, d.h. über eine gemeinsame Masse 12, miteinander verbunden sind, um so möglichst schnell die Temperatur des Hilfswiderstands 7 mit dem Temperatursensor 5 zu bestimmen. Der Hilfswiderstand 7 und die Widerstandsheizung 2 werden über einen Knotenpunkt 13 mit Spannung einer Versorgungsspannung 9 versorgt. Die andere Seite des Hilfswiderstands 7 ist mit der Masse 12 verbunden. Der Temperatursensor 5 ist auf seiner einen Seite auf Masse 12 gelegt, während seine andere Seite mit einem Mikroprozessor 14 verbunden ist. Gleichzeitig ist dieser Mikroprozessor 14 eingangsseitig mit der Strommesseinrichtung 11 verbunden.

Durch diese zumindest zeitweise kontinuierlich arbeitende und präzise Strommesseinrichtung 11 ist eine erhöhte Bauteil schonendere Frühabschaltung bei Kurzschluss oder Überlast, verglichen mit einer Abschaltung über Spannung oder Temperatur, gegeben.

Mit Kenntnis einer Starttemperatur, beispielsweise beim Anlassen des Fahrzeugs und/oder beim Einschalten der Heizung, wird analog zu einer temperaturabhängigen Zeitsteuerung die benötigte Wärmemenge ermittelt, die zur gewünschten Oberflächentemperatur in dem Heizbereich 6 der Widerstandsheizung 2 führt. Auch kann unter Kenntnis eines zu beheizenden Heizbereichs 6 und damit der Regelstrecke der Temperaturverlauf der Widerstandsheizung 2 über die Zeit bei Beaufschlagung mit einer bestimmten Wärmemenge ermittelt werden. Durch externe Einflüsse und unterschiedliche Bezüge bzw. Abdeckungen (Bezugsmaterialien des Sitzes oder des Lenkrads) weicht die Realität jedoch stark von der gemessenen Wärme ab. Daher wird mittels der genauen Strommessung die Temperatur der Widerstandsheizung 2 über die Veränderung des Laststroms 4, verursacht durch den Temperaturkoeffizienten des eingesetzten Heizleiters bei der Widerstandsheizung 2, ausgelesen.

Soweit in den Figuren Bauteile mit denselben Bezugszeichen bezeichnet sind, so kann die Beschreibung zu dem entsprechenden Bauteil einer Figur auf die anderen Figuren übertragen werden, ohne dass diese Bauteile und ihre Funktionen erneut zu diesen anderen Figuren beschrieben werden.

In Figur 1B weist das Blockschaltbild der Steuereinrichtung 3 eine Strommesseinrichtung 11, die einen Hilfswiderstand 7 beinhaltet, auf, der durch thermische Kopplung 8 mit einem Temperatursensor 5 in Verbindung steht. Da bei dieser Ausführungsform kein gemeinsames Potential vorhanden ist, misst der Temperatursensor 5 die Temperatur des Hilfswiderstands 7 mittelbar durch eine räumlich nahe Anordnung. Der Hilfswiderstand 7 und die Widerstandsheizung 2 werden von dem gleichen Strom durchflossen. Der Temperatursensor 5 ist auf einer Seite auf Masse 12 gelegt, während seine andere Seite mit dem Mikroprozessor 14 verbunden ist. Gleichzeitig ist dieser Mikroprozessor 14 eingangsseitig mit der Strommesseinrichtung 11 verbunden. Dieser Aufbau ist preisgünstiger, jedoch weniger schnell beziehungsweise dynamisch im erfassen von Temperaturänderungen.

Der Hilfswiderstand 7 erzeugt in der Steuereinrichtung 3 eine Temperatur, die gleichzeitig mit der Temperatur des Heizbereichs 6 steigt oder fällt. Erfasst wird die Temperatur durch den Temperatursensor 5, der in der Steuereinrichtung 3 angeordnet ist.

In dem Blockschaltbild der Figur 1C steht der Temperatursensor 5 mit dem Schalter 15 über die thermische Kopplung 8 in Verbindung. Der Schalter 15 wird, wie in allen Figuren 1A, 1B und 1C dargestellt, als MOSFET ausgeführt und beinhaltet daher einen nicht dargestellten Anschaltwiderstand, der die Funktion des Hilfswiderstands 7 erfüllt. Somit wird die Widerstandsheizung 2 mit dem Laststrom 4 durch den Hilfswiderstand 7, integriert im Schalter 15 und der Strommesseinrichtung 11, versorgt. Der Temperatursensor 5 ist auf einer Seite auf Masse 12 gelegt, während seine andere Seite mit dem Mikroprozessor 14 verbunden ist. Gleichzeitig ist der Mikroprozessor 14 eingangsseitig mit der Strommesseinrichtung 11 verbunden.

Die Anordnung der Bauteile in den dargestellten Blockschaltbildern der Figuren 1 ist nur schematisch und keinesfalls vollständig, auch die räumliche Anordnung der Bauteile ist nur beispielhaft.

Die Heizeinrichtung 1 wie sie in den Figuren dargestellt ist, umfasst somit eine Widerstandsheizung 2 sowie eine Steuereinrichtung 3. Diese Widerstandsheizung 2 wird dazu eingesetzt, eine Fläche in einem Kraftfahrzeug, beispielsweise die Sitzfläche und/oder die Rückenlehnenfläche eines Sitzes oder auch den Lenkradkranz, zu beheizen. Der Heizbereich dieser Widerstandsheizung 2 ist mit der unterbrochenen Linie 6 gekennzeichnet.

In Figur 2 ist ein Reglerdiagramm der erfindungsgemäßen Heizeinrichtung dargestellt, auf das bereits im allgemeinen Teil der Beschreibung Bezug genommen wurde.

Soweit in dem Reglerdiagramm der Figur 2 Bauteile aus dem Blockschaltbild der Figur 1 dargestellt sind, sind diese mit denselben Bezugszeichen wie in Figur 1 bezeichnet.

Aus dem Reglerdiagramm ist weiterhin ein Leistungsschalter 15 ersichtlich, der über einen Regler 16 die Widerstandsheizung 2 und gleichzeitig den Hilfswiderstand 7 zyklisch aktiviert bzw. deaktiviert. Der Regler 16 vergleicht die Temperatur des Temperatursensors 5 mit einem Sollwert, der aus dem Aufheizverhalten der Widerstandsheizung 2 gewonnen wird.

Dabei wird im Einschaltmoment 18 unter der Annahme, dass die initial gemessene Temperatur des Temperatursensors 5 vergleichbar der Temperatur der Widerstandsheizung 2 ist, ein maximal zulässiger Wert der Widerstandsheizung 2 definiert.

Im Verlauf des Aufheizvorgangs wird kontinuierlich überprüft, ob die über die Widerstandsermittlung der Widerstandsheizung 2 erfassten Werte zum Aufheizverhalten 19 der Widerstandsheizung 2 passen (Plausibilisierung 17) und keine größeren Abweichungen gegenüber dem erwarteten Verhalten vorliegen, beispielsweise bedingt durch eine Abdeckung oder externe Einflüsse. Falls eine Abweichung festgestellt wird, ist es dadurch möglich, den vom Regler 16 ermittelten Stellwert zu begrenzen oder die Heizung komplett abzuschalten.

Mit der Solltemperatur 20 wird ein Offset in Abhängigkeit einer Heizstufe zu der zuvor ermittelten Reglerparameter addiert.

## Patentansprüche

1. Heizeinrichtung (1) für Kraftfahrzeuge mit mindestens einem eine elektrische Widerstandsheizung (2) bildenden Heizleiter, der einen definierten Temperaturkoeffizienten aufweist, mit einer dieser Widerstandsheizung (2) zugeordneten Steuereinrichtung (3) und mit einem Temperatursensor (5), **dadurch gekennzeichnet, dass** die Steuereinrichtung (3) entfernt von der Widerstandsheizung (2) außerhalb deren Heizbereichs (6) angeordnet ist und einen Hilfswiderstand (7) aufweist, der an einer Spannung anliegt oder durch den ein Strom fließt, wobei diese Spannung bzw. dieser Strom proportional zu der an der Widerstandsheizung anliegenden Spannung bzw. dem durch die Widerstandsheizung (2) fließenden Strom ist, und dass der Temperatursensor (5) innerhalb der Steuereinrichtung (3) so angeordnet ist, dass er thermisch mit dem Hilfswiderstand (7) gekoppelt (8) ist, dass die Steuereinrichtung (3) eine der Widerstandsheizung (2) zugeordnete Spannungs- und/oder Strommesseinrichtung (11) und einen Mikroprozessor (14) aufweist, in dem Kennlinien gespeichert sind, die die über den Temperatursensor (5) gemessene Temperatur zu der an der Widerstandsheizung (2) anliegenden Spannung und/oder zu dem der Widerstandsheizung (2) zugeführten Strom und damit zu der durch die Heizeinrichtung erzeugten Temperatur zuordnen, und die auf das zeitliche Verhalten der Temperaturänderungen der Widerstandsheizung (2) aufgrund von Änderungen der an Widerstandsheizung (2) anliegenden Spannung und/oder aufgrund von Änderungen des der Widerstandsheizung (2) zugeführten Stroms abgestimmt sind.

2. Sitzheizung mit einer Heizeinrichtung (1) nach Anspruch 1.

3. Lenkradheizung mit einer Heizeinrichtung (1) nach Anspruch 1.

4. Verfahren zur Steuerung der Temperatur einer mindestens einen Heizleiter umfassenden elektrischen Widerstandsheizung (2) für Kraftfahrzeuge mittels einer Steuereinrichtung (3) und eines Temperatursensors (5), **dadurch gekennzeichnet, dass** die Temperatur des thermisch mit einem Hilfswiderstand (7) gekoppelten Temperatursensors (5) dazu herangezogen wird, um die an der Widerstandsheizung (2) anliegende Spannung oder den durch die Widerstandsheizung (2) fließenden Strom einzustellen, wobei der Hilfswiderstand (7) in der Steuereinrichtung (3), der als Aufheizmodell für die Widerstandsheizung (2) dient, mit einer Spannung proportional zu der an der Widerstandsheizung (2) anliegenden Spannung oder mit einem Strom, der zu dem durch die Widerstandsheizung (2) fließenden Strom proportional ist, betrieben wird, dass die Widerstandsheizung (2) mittels in der Steuereinrichtung (3) gespeicherter Kennlinien und unter Berücksichtigung des Temperaturkoeffizienten des Heizleiters und/oder mittels in der Steuereinrichtung (3) gespeicherter Kennlinien, die die über den Temperatursensor (5) gemessene Temperatur zu der an der Widerstandsheizung (2) anliegenden Spannung zuordnen, und/oder mittels in der Steuereinrichtung (3) gespeicherter Kennlinien, die die über den Temperatursensor (5) gemessene Temperatur zu der durch die Widerstandsheizung (2) fließenden Strom zuordnen, eingestellt wird.

5. Verfahren nach Anspruch 4, **dadurch gekennzeichnet, dass** zusätzlich eine Temperaturänderung der Widerstandsheizung (2) mittels einer Messung des an der Widerstandsheizung (2) anliegenden Spannung und einer Messung des durch die Widerstandsheizung (2) fließenden Stroms und einer Umrechnung dieser Messwerte unter Berücksichtigung des Temperaturkoeffizienten des Heizleiters der Widerstandsheizung (2) zur Steuerung der Widerstandsheizung (2) verwendet wird.

## Claims

1. Heating device (1) for motor vehicles with at least one heating conductor forming an electrical resistance heater (2) and having a defined temperature coefficient, with a control device (3) associated with said resistance heater (2) and with a temperature sensor (5), **characterized in that** the control device (3) is arranged remote from the resistance heater (2) outside its heating region (6) and has an auxiliary resistor (7) which is applied to a voltage or through which a current flows, wherein said voltage or said current is proportional to the voltage applied to the resistance heater or the current flowing through the resistance heater (2), and that the temperature sensor (5) is arranged within the control device (3) such that it is thermally coupled (8) to the auxiliary resistor (7), that the control device (3) has a voltage and/or current measuring device (11) assigned to the resistance heater (2) and a microprocessor (14) in which characteristics are stored, which assign the temperature measured via the temperature sensor (5) to the voltage applied to the resistance heater (2) and/or to the current supplied to the resistance heater (2) and thus to the temperature generated by the heating device, and which are matched to the temporal behavior of the temperature changes of the resistance heater (2) due to changes in the voltage applied to the resistance heater (2) and/or due to changes in the current supplied to the resistance heater (2).

2. Seat heater with a heating device (1) according to claim 1.

3. Steering wheel heater with a heating device (1) according to claim 1.

4. Method for controlling the temperature of an electrical resistance heater (2) for motor vehicles comprising at least one heating conductor by means of a control device (3) and a temperature sensor (5), **characterized in that** the temperature of the temperature sensor (5) thermally coupled to an auxiliary resistor (7) is used to adjust the voltage applied to the resistance heater (2) or the current flowing through the resistance heater (2), wherein the auxiliary resistor (7) in the control device (3), which serves as a heating model for the resistance heater (2), is operated with a voltage proportional to the voltage applied to the resistance heater (2) or with a current proportional to the current flowing through the resistance heater (2), that the resistance heater (2) is adjusted by means of characteristics stored in the control device (3) and taking into account the temperature coefficient of the heating conductor and/or by means of characteristics stored in the control device (3) which assign the temperature measured via the temperature sensor (5) to the voltage applied to the resistance heater (2), and/or by means of characteristics stored in the control device (3) which assign the temperature measured via the temperature sensor (5) to the current flowing through the resistance heater (2).

5. Method according to claim 4, **characterized in that** additionally a temperature change of the resistance heater (2) is used for controlling the resistance heater (2) by measuring the voltage applied to the resistance heater (2) and measuring the current flowing through the resistance heater (2) and converting these measured values taking into account the temperature coefficient of the heating conductor of the resistance heater (2).

## Revendications

1. Dispositif de chauffage (1) pour véhicules automobiles, comprenant au moins un conducteur chauffant qui forme un chauffage par résistance (2) électrique et qui présente un coefficient de température défini, un dispositif de commande (3) associé à ce chauffage par résistance (2) et un capteur de température (5), **caractérisé en ce que** le dispositif de commande (3) est agencé à distance du chauffage par résistance (2) à l'extérieur de la zone de chauffage (6) de ladite résistance et présente une résistance auxiliaire (7) qui s'applique sur une tension ou à travers laquelle circule un courant, cette tension ou ce courant étant proportionnel(le) à la tension s'appliquant sur le chauffage par résistance ou au courant circulant à travers le chauffage par résistance (2), et **en ce que** le capteur de température (5) est agencé à l'intérieur du dispositif de commande (3) de sorte qu'il est couplé (8) thermiquement à la résistance auxiliaire (7), que le dispositif de commande (3) comprend un dispositif de mesure de tension et/ou de courant (11) associé au chauffage par résistance (2) et un microprocesseur (14) dans lequel des courbes caractéristiques sont mises en mémoire, lesquelles associent la température mesurée par le capteur de température (5) à la tension appliquée sur le chauffage par résistance (2) et/ou au courant amené au chauffage par résistance (2) et donc à la température produite par le dispositif de chauffage, et lesquelles sont adaptées au comportement dans le temps des variations de température du chauffage par résistance (2) sur la base de variations de la tension s'appliquant sur le chauffage par résistance (2) et/ou sur la base de variations du courant amené au chauffage par résistance (2).

2. Chauffage de siège comprenant un dispositif de chauffage (1) selon la revendication 1.

3. Chauffage de volant comprenant un dispositif de chauffage (1) selon la revendication 1.

4. Procédé de commande de la température d'un chauffage par résistance (2) électrique de véhicules automobiles, le chauffage comprenant au moins un conducteur chauffant, au moyen d'un dispositif de commande (3) et d'un capteur de température (5), **caractérisé en ce que** la température du capteur de température (5) couplé thermiquement à une résistance auxiliaire (7) est utilisée pour régler la tension s'appliquant sur le chauffage par résistance (2) ou le courant circulant à travers le chauffage par résistance (2), dans lequel la résistance auxiliaire (7) fonctionne dans le dispositif de commande (3), qui sert de modèle de chauffage au chauffage par résistance (2), au moyen d'une tension proportionnelle à la tension s'appliquant sur le chauffage par résistance (2) ou d'un courant proportionnel au courant circulant à travers le chauffage par résistance (2), **en ce que** le chauffage par résistance (2) est réglé au moyen de courbes caractéristiques mises en mémoire dans le dispositif de commande (3) et avec prise en compte du coefficient de température du conducteur chauffant et/ou au moyen de courbes caractéristiques mises en mémoire dans le dispositif de commande (3), qui associent la température mesurée par le capteur de température (5) à la tension s'appliquant sur le chauffage par résistance (2), et/ou au moyen de courbes caractéristiques mises en mémoire dans le dispositif de commande (3), qui associent la température mesurée par le capteur de température (5) au courant circulant à travers le chauffage par résistance (2).

5. Procédé selon la revendication 4, **caractérisé en ce qu'**on utilise en plus une variation de température du chauffage par résistance (2) au moyen d'une mesure de la tension s'appliquant sur le chauffage par résistance (2) et d'une mesure du courant circulant à travers le chauffage par résistance (2) et d'une conversion de ces valeurs de mesure avec prise en compte du coefficient de température du conducteur chauffant du chauffage par résistance (2) pour commander le chauffage par résistance (2).
